# Europäisches Patentamt

# European Patent Office

# Office européen des brevets

(19)

(11) Publication number: **0 027 432**
**B2**

(12) ## NEW EUROPEAN PATENT SPECIFICATION

(45) Date of publication of the new patent specification:
24.08.88

(51) Int. Cl.⁴: **G 05 B 19/10**

(21) Application number: **80830076.8**

(22) Date of filing: **06.10.80**

(54) Electronic data memorising circuit in a domestic electrical appliance.

(30) Priority: **04.10.79 IT 6891579**

(43) Date of publication of application:
**22.04.81 Bulletin 81/16**

(45) Publication of the grant of the patent:
**18.04.84 Bulletin 84/16**

(45) Mention of the opposition decision:
**24.08.88 Bulletin 88/34**

(84) Designated Contracting States:
**BE DE FR GB NL**

(56) References cited:
**DE - A - 2 600 641**
**DE - A - 2 716 240**
**FR - A - 2 414 755**
**GB - A - 1 529 691**
**US - A - 4 054 911**

**IBM TECHNICAL DISCLOSURE BULLETIN, vol. 20, no. 10, March 1978, pages 4071-4072 New York, U.S.A. M.E. CHAMOFF et al.: "Nonvolatile totals implementation"**
**Bauteile Report 14, No. 2, 1976, pp. 33-36**
**Appliance Manufacturer, July 1976, pp. 32-36**
**Appliance Engineer, Oct. 1976, pp. 98-101**
**Appliance, May 1978, pp. 51-54**

(73) Proprietor: **INDESIT INDUSTRIA ELETTRODOMESTICI ITALIANA S.p.A., Str. Piossasco Km 17, I-10040 Rivalta Turin (IT)**

(72) Inventor: **Belisomi, Pietro, Viale Rimembranza 50, I-10064 Pinerolo (Torino) (IT)**

(74) Representative: **Jacobacci, Filippo et al, c/o JACOBACCI-CASETTA & PERANI S.n.c. Via Alfieri, 17, I-10121 Torino (IT)**

EP 0 027 432 B2

## Description

The present invention relates to a circuit as set forth in the first portion of appended Claim 1.

Up to now, so-called automatic household appliances (clothes- and dish-washing machines, ovens, etc.) have been fitted mainly with mechanical or electromechanical timers.

Another kind of timer for a washing machine is disclosed in GB-A 1 529 691. This known device includes a partly electronic, partly electromechanical logic circuit capable of discriminating, by means of a switch associated with the mains switch of the machine, whether the machine has been siwtched off intentionally or there has been a power failure. The said logic circuit includes bistable electronic memory circuits having a battery back-up supply and an electromechanical relay which senses whether the current supply has been deliberately interrupted and, if so, causes the memory circuits to be reset by interrupting the back-up supply.

The known control and timing devices which include mechanical or electromechanical components are now being replaced by wholly electronic devices. The wholly electronic devices now being used usually comprise a processing unit (microprocessor), a fixed operating programme memory (ROM) and a read-write memory (RAM) for memorising information data relative to the programme being performed.

Electronic devices of this kind have a greater processing capacity than their electromechanical counterparts which means they can perform more sophisticated programmes, be controlled automatically, indicate various operating defects and so on. One problem exists, however, as regards data memorization. The memory must be capable of preserving data in the event of an accidental power cut on the mains. Two solutions are available:
- volatile memory with an auxiliary supply battery,
- non-volatile memory.

In both cases, it is desirable:
- for the programme to be taken up more or less from where it was left off in the event of an accidental power cut;
- for the machine to "forget" the programme it was performing and start again from the beginning if it is turned off manually by the operator before the programme has been finished. This enables the operator to reselect the programme if a wrong one is started.

For this purpose, it is common practice to fit the on/off switch with a second section and to interlock this second section with continuation of the interrupted programme or resetting to the starting point of the programme.

Electronic processing devices (microprocessors) are usually fitted with a special circuit, known as an "On reset" circuit, for restarting them when supply is restored after a power cut.

When power is restored, a check can then be made to ascertain whether the on/off switch is closed or open and whether the programme is to be continued or not. To ensure smooth operation of this system, the on/off switch must have two sections: one of which closes immediately and supplies the processing unit and the other of which closes after a delay and whose condition is checked by the processing unit which, if it finds it open, starts the machine up again from the beginning.

This system is critical and demands a special switch. The aim of the present invention is to provide a simple, reliable wholly electronic circuit with the above performance.

With this aim in view, the present invention relates to as circuit for memorising in digital form in an electronic memory information relating to a programme operating in a domestic appliance, in particular, a clothes washing machine, as set forth in the first part of Claim 1, having the features recited in the characterizing portion of Claim 1.

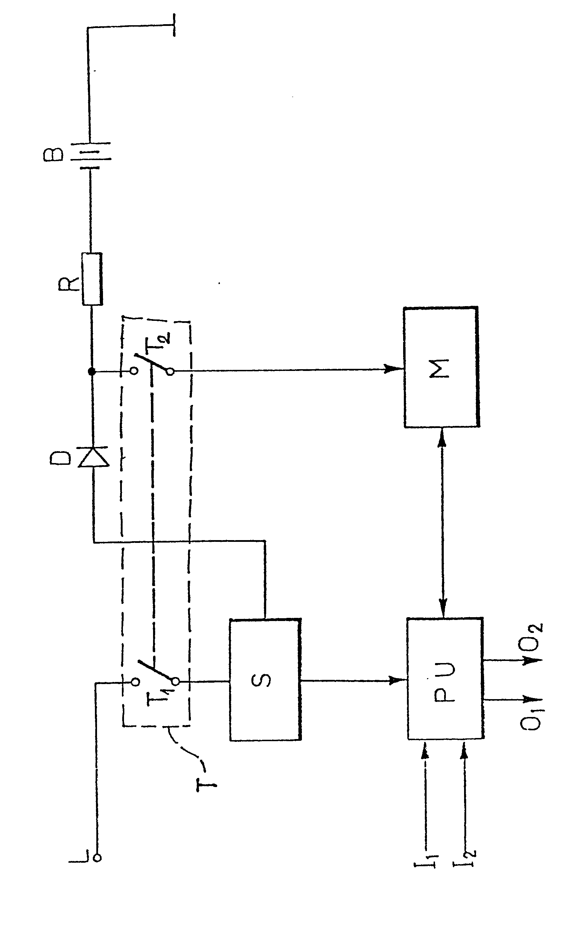

The invention will now be described in detail with reference to the attached drawing provided by way of a non-limiting example.

The attached drawing shows a block diagram of a memory circuit according to the present invention.

The letter L represents the power supply line (household mains), T the on/off switch on the machine (e.g. washing machine), having two sections $T_1$ and $T_2$, and S a power unit for supplying processing unit PU and a number of other possible circuits not shown (electromechanical actuators, etc.).

Unit S is also connected via diode D and resistor R to battery B. The voltage of battery B is lower than that supplied by unit S. For example, the battery voltage may be 2.4 V (2 rechargeable nickelcadmium cells) whereas the voltage supplied by S may be 5 V. An electronic memory M (e.g. Intel 5101L-3 256×4 bit RAM) is supplied via the second section $T_2$ of switch T, mechanically connected to the first from the intersection of diode D and resistor R.

The processing unit PU (e.g. Fairchild F 3870 microprocessor) is connected to memory M by a number of lines (4 two-way lines for data, 5 for addresses 2 for control) and also to a number of signal inputs (two are exemplified on the diagram, $I_1$ and $I_2$) for example, from a keyboard and sensor devices (thermostats, pressure switches, etc.) and a number of signal outputs (two are exemplified on the diagram, $O_1$ and $O_2$), connected, for example, to display (LED) and actuator (triac) devices for controlling the motor, heating resistor, electrovalves, etc.

None of these devices is shown on the diagram in that they are known types not pertinent to the invention. The circuit described operates as follows.

Processing unit PU contains a 2048-byte ROM containing the machine's operating programme. This may comprise a sequence of control and actuating operations for enabling the machine to perform one or more (e.g. wash) programmes according to the data received initially (e.g. when the machine was turned on) from the operator (e.g. from the keyboard).

Each programme will comprise a number of successive stages (e.g. soak, prewash, heat, wash, rinses, spinning).

It is not necessary here to describe these operations in detail or how they are controlled by the PU.

The invention is designed so that, a number of times during the programme (e.g. at the start of each of the abovementioned stages), the PU provides for memorising in M the data required for taking up the programme following a power cut. Such data may be represented, for example, by 8 bytes, to indicate:

– the number of the programme being performed,

– the programme stage being performed,

– input-output status,

– any special options selected by the operator at the beginning (economy cycle, slow spin, etc.).

Besides this data, the PU also memorises a set of control data (e.g. the ones complement to one of the 8 data bytes) for checking the called up data is correct.

In the example given, a total of 16 bytes have to be memorised occupying 32 cells of the 256×4. When supply is restored after a power cut, the PU performs the automatic "ON RESET" cycle which starts the programme counter from a preset point (0000 in the case of F 3870). The invention is designed so that a memory reading (data call up) routine is situated at this point for checking the data is correct. If it is found to be correct, the PU restores the required data in the appropriate registers and sets the programme counter so as to take up the programme more or less from where it was left off. If the data is found to be incorrect, however, the PU waits for further instructions from the operator (from the keyboard) by returning to the start of the programme. In view of the circuit arrangement, it will be clear that, if power failure is due to an accidental power cut on the mains, switch T will remain closed, memory M will be supplied by battery B and the data read will be correct. If, on the other hand, the power cut is due to the operator turning the machine off, memory M will be left unsupplied during the interruption, the data will be lost so that the random data read will be incorrect.

Variations can, of course, be made to the circuit described. For example, instead of using an F 3870 microprocessor and a separate memory, an F 3876 can be used which incorporates a battery-suppliable 128×8 RAM. Or, instead of a volatile RAM from which supply is cut off by the on/off switch, a clearable nonvolatile RAM can be used with the memory clearing bit controlled by the second section of switch T. The advantages of the circuit in terms of simplicity and reliability will be clear from the description given. It should be pointed out that the fact that the 2 sections of switch T open and/or close before or after one another has no effect on operation and that correct data reading is highly realiable: in the example given, the probability of the bits being correctly distributed by chance is $1/2^{64}$.

**Claims**

1. A circuit for memorising, in digital form, in an electronic memory (M) information relating to a programme operating in a domestic electrical appliance in particular a clothes washing machine, said circuit comprising a main switch ($T_1$) for switching the appliance on or off, a power supply unit (S) connectable to the mains domestic electricity supply (L) via the said switch ($T_1$), a processing unit (PU) connected to the power supply unit (S) and arranged to receive input signals ($I_1$, $I_2$) and to provide output signals ($O_1$, $O_2$), and an electronic memory means (M) connected to said processing unit (PU) and capable of retaining information in digital form even in the case of interruption of power from the said mains supply, said circuit further comprising control means ($T_2$) arranged to determine, in the event of interruption of electric power and at the time of restoration of the said power, whether the said interruption was accidental due to failure of the mains supply, in which case said control means is operative to cause the appliance to continue to carry out the said programme substantially from the point at which it left off when power was interrupted, or whether the said interruption was intentional due to switching off the appliance by use of the said main switch ($T_1$), in which case said control means is operative to cause the programme to return to its initial position, said control means comprising auxiliary switch means ($T_2$) connected to the said memory means (M) and controlled by said main switch ($T_1$) to change the contents of said memory means (M) when the said main switch ($T_1$) ist switched off, characterised in that the said processing unit comprises a microprocessor unit (PU) having an electronic memory containing the machine's operating programme; in that the said memory means comprise an auxiliary electronic memory (M) coupled to said microprocessor unit (PU), and in that the said microprocessor unit (PU) is arranged to store in said auxiliary electronic memory (M) at predetermined times during the execution of a programme information data identifying the programme and the programme stage being performed and control data derived from the information data; the microprocessor unit (PU) being further arranged to recall, whenever the electric power supply is restored the data stored in said auxiliary memory (M) and to distinguish between accidental and deliberate interruption of power by checking the information data against the control data.

2. A circuit according to Claim 1, characterised in that the control data is constituted by the ones complement of a predetermined number of bits of the information data.

3. A circuit according to any of the preceding claims in which said memory is of the volatile kind, characterised in that the said auxiliary switch means ($T_2$) is arranged to cut off the supply of power from a back up battery (B) to the said auxiliary electronic memory (M) when the said main switch ($T_1$) is switched off, said memory (M) being thereby caused to lose the data held therein.

4. A circuit according to Claim 1 or 2, in which the said memory (M) is of the non-volatile cancellable kind, characterised in that the said auxiliary switch means ($T_2$) is arranged to enable the cancellation bit of the auxiliary memory (M), said auxiliary memory (M) being thereby caused to lose the data held therein.

5. A circuit according to any of the preceding claims, characterised in that the said auxiliary switch means consist of an additional section ($T_2$) of the said main switch ($T_1$) of the appliance.

**Patentansprüche**

1. Schaltung zum Speichern von auf ein Betriebsprogramm eines elektrischen Haushaltsgeräts, insbesondere einer Waschmaschine, bezogener Information in einem elektronischen Speicher (M) in digitaler Form, enthaltend einen zum Ein- oder Ausschalten des Geräts dienenden Hauptschalter ($T_1$), eine über den Schalter ($T_1$) an die elektrische Netzleitung (L) anschliessbare Spannungsversorgungseinheit (S), eine an die Spannungsversorgungseinheit (S) angeschlossene Verarbeitungseinheit (PU), die Eingangssignale ($I_1$, $I_2$) empfängt und Ausgangssignale ($O_1$, $O_2$) abgibt, eine elektronische Speichereinrichtung (M), die mit der Verarbeitungseinheit (PU) verbunden ist und dazu in der Lage ist, Information in digitaler Form auch dann zu halten, wenn die Spannungsversorgung von der Netzleitung unterbrochen ist, eine Steuereinrichtung ($T_2$), mit der im Falle einer Spannungsunterbrechung zum Zeitpunkt des Wieder-zur-Verfügung-Stehens der Spannung bestimmbar ist, ob die Unterbrechung zurückzuführen war auf einen Ausfall der Netzspannungsversorgung, in welchem Fall die Steuereinrichtung das Gerät veranlasst, mit dem Programm im wesentlichen dort fortzufahren, wo es zum Zeitpunkt der Spannungsunterbrechung aufgehört hat, oder ob die Unterbrechung zurückzuführen war auf ein absichtliches Ausschalten des Geräts durch Betätigen des Hauptschalters ($T_1$), in welchem Fall die Steuereinrichtung veranlasst, dass das Programm in seinen Anfangszustand zurückgesetzt wird, wobei die Steuereinrichtung eine Hilfsschaltereinrichtung ($T_2$) aufweist, die an die Speichereinrichtung (M) angeschlossen ist und von dem Hauptschalter ($T_1$) so gesteuert wird, dass der Inhalt der Speichereinrichtung (M) geändert wird, wenn der Hauptschalter ($T_1$) ausgeschaltet wird, dadurch gekennzeichnet, dass die Verarbeitungseinheit eine Mikroprozessoreinheit (PU) aufweist, die einen elektronischen Speicher besitzt, der das die Maschine betreibende Programm enthält; dass die Speichereinrichtung einen elektronischen Hilfsspeicher (M) aufweist, der mit der Mikroprozessoreinheit (PU) gekoppelt ist, und dass die Mikroprozessoreinheit (PU) in dem elektronischen Hilfsspeicher (M) zu vorbestimmten Zeiten während der Ausführung eines Programms Informationsdaten, die das Programm und die gerade ausgeführte Programmstufe identifizieren, und Steuerdaten, die von den Informationsdaten abgeleitet sind, speichert; und dass die Mikroprozessoreinheit (PU) ferner die in dem Hilfsspeicher (M) gespeicherten Daten immer dann abruft, wenn die elektrische Versorgungsspannung wieder zur Verfügung steht, und zwischen unbeabsichtigter und beabsichtigter Unterbrechung der Versorgungsspannung dadurch unterscheidet, dass die Informationsdaten mit den Steuerdaten zur Überprüfung verglichen werden.

2. Schaltung nach Anspruch 1, dadurch gekennzeichnet, dass die Steuerdaten aus den Einerkomplementen einer vorbestimmten Anzahl von Bits der Informationsdaten bestehen.

3 Schaltung nach einem der vorhergehenden Ansprüche, bei der der Speicher ein flüchtiger Speicher ist, dadurch gekennzeichnet, dass die Hilfsschaltereinrichtung ($T_2$) derart ausgebildet ist, dass sie beim Ausschalten des Hauptschalters ($T_1$) die von einer Hilfsbatterie (B) an den elektronischen Hilfsspeicher (M) gelegte Versorgungsspannung abtrennt, wobei der Speicher (M) die in ihm gespeicherten Daten verliert.

4. Schaltung nach Anspruch 1 oder 2, bei der der Speicher (M) ein nicht-flüchtiger löschbarer Speicher ist, dadurch gekennzeichnet, dass die Hilfsschaltereinrichtung ($T_2$) derart ausgebildet ist, dass sie das Löschbit des Speichers (M) freigibt, wodurch der Hilfsspeicher (M) die in ihm enthaltenen Daten verliert.

5. Schaltung nach einem der vorhergehenden Ansprüche, dadurch gekennzeichnet, dass die Hilfsschaltereinrichtung aus einem Zusatzabschnitt ($T_2$) des Hauptschalters ($T_1$) des Geräts besteht.

**Revendications**

1. Circuit de mémorisation, en forme numérique, dans une mémoire éléctronique (M) d'informations concernant un programme exécuté dans un appareil électroménager, en particulier une machine à laver le linge, ledit circuit comportant un commutateur principal ($T_1$) pour mettre en marche et arrêter l'appareil, une unité d'alimentation (S) pouvant être connectée à la source d'alimentation du secteur (L) par l'intermédiaire dudit commutateur ($T_1$), une unité de traitement (PU) connectée à l'unité d'alimentation (S) et agencée pour recevoir des signaux d'entrée ($I_1$, $I_2$) et pour produire des signaux de sortie ($O_1$, $O_2$) et une mémoire électronique (M) connectée à ladite unité de traitement (PU) et capable de retenir des informations en forme numérique même dans le cas d'une interruption de l'alimentation par ladite source d'alimentation, ledit circuit comportant en outre un dispositif de commande

(T₂) agencé pour déterminer, dans le cas d'une interruption d'alimentation électrique et au moment du rétablissement de ladite alimentation, si ladite interruption était accidentelle, due à une panne du secteur, auquel cas ledit dispositif de commande fonctionne pour que l'appareil continue à exécuter ledit programme, pratiquement à partir du point où il a été laissé quand l'alimentation a été interrompue, ou si ladite interruption était intentionnelle due à un arrêt de l'appareil au moyen dudit commutateur principal (T₁) auquel cas ledit dispositif de commande fonctionne pour que le programme revienne à sa position initiale, ledit dispositif de commande comportant un commutateur auxiliaire (T₂) connecté à ladite mémoire (M) commandé par ledit commutateur principal (T₁) pour changer le contenu de ladite mémoire (M) lorsque ledit commutateur principal (T₁) est ouvert, caractérisé en ce que ladite unité de traitement comprend un microprocesseur (PU) pourvu d'une mémoire éléctronique contenant le programme de fonctionnement de la machine, en ce que ladite mémoire comprend une mémoire électronique auxiliaire (M) connectée au microprocesseur (PU), et en ce que ledit microprocesseur (PU) est agencé de façon à mémoriser dans ladite mémoire électronique auxiliaire (M), à des instants prédéterminés pendant l'exécution d'un programme, des informations de données identifiant le programme et la phase du programme en cours d'exécution, et des données de commande dérivées des informations de données, le microprocesseur (PU) étant en outre agencé pour rappeler, à chaque fois que l'alimentation électrique est rétablie, les données mémorisées dans ladite mémoire auxiliaire (M), et pour distinguer entre une interruption accidentelle ou intentionelle d'alimentation en comparant les données d'informations avec les données de commande.

2. Circuit selon la revendication 1, caractérisé en ce que les données de commande sont constituées par les compléments à un d'un nombre prédéterminé de bits des informations de données.

3. Circuit selon l'une quelconque des revendications précédentes, dans lequel ladite mémoire est dut type volatile, caractérisé en ce que ledit commutateur auxiliaire (T₂) est agencé pour couper l'alimentation d'une batterie de secours (B) pour ladite mémoire électronique (M) quand ledit commutateur principal (T₁) est ouvert, ladite mémoire (M) perdant alors les données qu'elle contient.

4. Circuit selon la revendication 1 ou 2, dans lequel ladite mémoire (M) est du type non-volatile effaçable, caractérisé en ce que ledit commutateur auxiliaire (T₂) est agencé pour autoriser le bit d'effacement de la mémoire (M), ladite mémoire (M) perdant ainsi les données qui y étaient maintenues.

5. Circuit selon l'une quelconque des revendications précédentes, caractérisé en ce que ledit commutateur auxiliaire consiste en une section supplémentaire (T₂) dudit commutateur principal (T₁) de l'appareil.